# EUROPÄISCHE PATENTSCHRIFT

(11) **EP 3 289 194 B1**
(45) Veröffentlichungstag und Bekanntmachung des Hinweises auf die Patenterteilung: **10.07.2019**
(21) Anmeldenummer: 16717965.4
(22) Anmeldetag: 25.04.2016
(51) Int. Cl.: F01N 3/20

(54) **INJEKTOR MIT EINER VERSTÄRKTEN SPRÜHSCHEIBE**
INJECTOR WITH RE-ENFORCED SPRAY NOZZLE PLATE
INJECTEUR AVEC UNE PLAQUE DE SPRAY RENFORCÉE

(30) Priorität: 27.04.2015 DE 102015207715
(43) Veröffentlichungstag der Anmeldung: 07.03.2018
(73) Patentinhaber: CPT Group GmbH, 30165 Hannover (DE)
(72) Erfinder: SCHEPERS, Sven, 53844 Troisdorf (DE); BRÜCK, Rolf, 51429 Bergisch Gladbach (DE)
(86) Internationale Anmeldenummer: PCT/EP2016/059145
(87) Internationale Veröffentlichungsnummer: WO 2016/173974

(56) Entgegenhaltungen:
- EP-A1- 1 698 768
- EP-A1- 1 698 768
- EP-A1- 1 888 249
- EP-B1- 1 339 956
- EP-B1- 1 339 956
- WO-A1-2014/000947
- DE-A1-102009 002 290
- DE-A1-102009 002 290
- DE-A1-102009 034 072

## Beschreibung

Die Erfindung betrifft einen Injektor zur Zugabe eines flüssigen Additivs in eine Abgasbehandlungsvorrichtung.

Aus dem Stand der Technik sind Abgasbehandlungsvorrichtungen bekannt, welchen ein Additiv zugeführt wird. In derartigen Abgasbehandlungsvorrichtungen finden spezielle Abgasreinigungsverfahren statt, bei denen das Abgas einer angeschlossenen Verbrennungskraftmaschine unter Zuhilfenahme des Additivs gereinigt wird. Beispielsweise können bestimmte Schadstoffbestandteile im Abgas mit dem Additiv zu unschädlichen Substanzen umgesetzt werden. Als (flüssiges) Additiv können z. B. Wasser, Kraftstoff, Oxidationsmittel und/oder Reduktionsmittel eingesetzt werden.

Ein häufig durchgeführtes Abgasreinigungsverfahren ist das Verfahren der selektiven katalytischen Reduktion (SCR-Verfahren, SCR = selective catalytic reduction), bei welchem dem Abgas ein Reduktionsmittel zugeführt wird, mit dem Stickoxidverbindungen im Abgas zu Stickstoff, Wasser und CO₂ reduziert werden. Als Reduktionsmittel wird bevorzugt Ammoniak verwendet. Ammoniak wird in Kraftfahrzeugen normalerweise nicht selbst bevorratet, sondern in Form eines flüssigen Additivs, das zu dem eigentlichen Reduktionsmittel im Bedarfsfall umgesetzt werden kann. Als flüssiges Additiv kann beispielsweise wässrige Harnstoff-Lösung verwendet werden. Eine geeignete 32,5 %-ige wässrige Harnstoff-Lösung ist unter dem Handelsnamen AdBlue® erhältlich.

Zur Zugabe von flüssigem Additiv in eine Abgasbehandlungsvorrichtung kommt insbesondere ein Injektor in Betracht. Aufgrund der typischerweise hohen Temperaturen der Abgase in einer Abgasbehandlungsvorrichtung sollte der Injektor entsprechend hochtemperaturbeständig gestaltet sein. Häufig ist in dem Injektor ein Ventil angeordnet, welches zur Zufuhr des flüssigen Additivs kontrolliert geöffnet und geschlossen werden kann. Ein solches Ventil ist regelmäßig besonders temperaturempfindlich und sollte daher vor den hohen Temperaturen der Abgasbehandlungsvorrichtung geschützt werden.

Ein weiteres Problem ist, dass wässrige Additive (insbesondere Reduktionsmittel) bei niedrigen Umgebungstemperaturen einfrieren können. Die beschriebene 32,5 %-ige Harnstoff-Wasser-Lösung AdBlue® friert beispielsweise bereits bei -11 °C ein. Derart niedrige Temperaturen können im Kraftfahrzeug zum Beispiel während langer Stillstandzeiten auftreten. Beim Einfrieren dehnt sich das Additiv aus. Dabei kann der Injektor beschädigt werden, wenn sich darin im Einfrierfall noch Additiv befindet. Darüber hinaus ist es regelmäßig erforderlich, dass das flüssige Additiv dem Abgas fein zerstäubt zugeführt wird, um eine gute und vollständige Verdampfung in der Abgasbehandlungsvorrichtung und eine vollständige Umsetzung zu dem eigentlichen Reduktionsmittel zu gewährleisten.

Eine feine Zerstäubung kann beispielsweise mit einer Sprühscheibe erreicht werden, die eine Düse zur zerstäubten Zugabe des flüssigen Additivs zu der Abgasbehandlungsvorrichtung bildet. Die für den Stand der Technik relevanten Dokumente sind: EP 1 698 768 A1, DE 10 2009 002290 A1, EP 1 339 956 B1, WO 2014/000947 A1, EP 1 888 249 A1 und DE 10 2009 034072 A1.

Ausgehend von dem obigen Stand der Technik ist es Aufgabe der hier vorliegenden Erfindung, einen Injektor zur Einspritzung eines flüssigen Additivs in eine Abgasbehandlungsvorrichtung anzugeben, welcher zumindest teilweise die oben angesprochenen technischen Probleme löst. Insbesondere soll der neue Injektor durch Einfrieren des Additivs nicht beschädigt werden, eine feine Zerstäubung von flüssigem Additiv in der Abgasbehandlungsvorrichtung ermöglichen und besonders hochtemperaturfest sein.

Diese Aufgaben werden gelöst mit einem Injektor gemäß den Merkmalen des Patentanspruchs 1. Weitere vorteilhafte Ausgestaltungen der Erfindung sind in den jeweils abhängig formulierten Patentansprüchen angegeben. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden. Die Erfindung betrifft einen Injektor zur Zugabe eines flüssigen Additivs in eine Abgasbehandlungsvorrichtung. Der Injektor weist zumindest eine mit einer Sprühscheibe gebildete Düse zum Eindüsen des flüssigen Additivs in die Abgasbehandlungsvorrichtung auf, wobei die Sprühscheibe mindestens zwei durchströmbare Sprühkanäle mit jeweils einer Austrittsöffnung aufweist, wobei die Austrittsöffnung so ausgebildet ist, dass diese einen Sprühstrahl formt und wobei die Sprühscheibe stromab der Austrittsöffnung mit einer Verstärkungsstruktur gebildet ist, wobei die Verstärkungsstruktur so ausgebildet ist, dass diese nicht von dem Sprühstahl benetzt wird.

Der vorliegenden technischen Lösung liegt die Idee zugrunde, eine Sprühscheibe mittels einer Verstärkungsstruktur zu verstärken, so dass die Sprühscheibe auch hohen Eisdrücken in dem Injektor standhalten kann.

Ein Injektor bezeichnet ein Bauteil, welches beispielsweise an eine dafür vorgesehene Öffnung in der Wandung einer Abgasbehandlungsvorrichtung bzw. Abgasleitung kontaktiert werden kann. Der Injektor kann somit dauerhaft oder wieder lösbar, bevorzugt jedoch gasdicht, an die Abgasbehandlungsvorrichtung angebaut, angesetzt und/oder angeflanscht werden. Der Injektor ist beispielsweise in der Art eines insbesondere kontrolliert betreibbaren und/oder selbstständig (druckabhängig) arbeitenden Einspritzventils oder dergleichen gebildet.

Die Sprühscheibe bzw. die von der Sprühscheibe gebildete Düse bildet in Strömungsrichtung betrachtet die letzte Station des flüssigen Additivs innerhalb des Injektors vor dem Eintritt in die Abgasbehandlungsvorrichtung. Die Düse dient zum Eindüsen des flüssigen Additivs in die Abgasbehandlungsvorrichtung, insbesondere in die Abgasleitung. Die Düse ist dazu bestimmt, ein vorgebbares Sprühbild bzw. einen vorgebbaren Sprühkegel zu formen bzw. zu erzeugen. Hierzu ist die Düse mit einer Sprühscheibe gebildet. Die Sprühscheibe hat mindestens zwei Sprühkanäle und bevorzugt eine Vielzahl von Sprühkanälen, die dazu bestimmt sind Tropfen des flüssigen Additivs zu erzeugen.

Jeder Sprühkanal ist für das flüssige Additiv durchströmbar. Dies bedeutet mit anderen Worten auch, dass jeder Sprühkanal die Sprühscheibe (vollständig) in Strömungsrichtung durchdringt. Die Sprühscheibe ist scheibenförmig bzw. plattenförmig gebildet.

Die Sprühscheibe ist bevorzugt im Querschnitt rundförmig, insbesondere kreisförmig bzw. oval, gebildet. Dies ist jedoch nicht zwingend, weil die Sprühscheibe auch eckig, insbesondere rechteckig, bevorzugt quadratisch, gebildet sein kann. Die Sprühkanäle verlaufen bevorzugt quer, insbesondere senkrecht, zu der im Wesentlichen ebenen Querausbreitung der Sprühscheibe. Dies ist jedoch nicht zwingend, weil jeder Sprühkanal auch zumindest teilweise geneigt ausgeführt sein kann. Jeder Sprühkanal kann einen rundförmigen, insbesondere kreisförmigen bzw. ovalen, oder einen eckigen, insbesondere rechteckigen, bevorzugt quadratischen, Kanalquerschnitt aufweisen, je nachdem welche Form des Sprühkanals für die Ausbildung eines Sprühkegels des flüssigen Additivs besonders vorteilhaft ist.

Die mindestens zwei Sprühkanäle haben jeweils eine Austrittsöffnung, die so ausgebildet ist, dass diese einen Sprühstrahl bzw. einen Sprühkegel und/oder ein Spraybild formt bzw. bildet. Die Austrittsöffnung betrifft hier insbesondere eine Engstelle des Sprühkanals.

Stromab der Austrittsöffnung ist die Sprühscheibe mit einer Verstärkungsstruktur gebildet. Die Begriffe "stromab" bzw. "stromauf" beziehen sich hier auf die Strömungsrichtung des Additivs durch den Sprühkanal. Die Verstärkungsstruktur ist mit anderen Worten ausgedrückt an einer Unterseite bzw. an einer zu der Abgasbehandlungsvorrichtung hin ausgerichteten Seite der Sprühscheibe gebildet. Die Verstärkungsstruktur kann mit mindestens einer Verstärkungsrippe, mindestens einer Verstärkungsscheibe, mittels eines zusätzlichen Materialauftrags, oder dergleichen gebildet sein. Die Verstärkungsstruktur ermöglicht es, dass die Sprühscheibe hohen Eisdrücken standhalten kann. Vorzugsweise ist die Sprühscheibe bei der Herstellung des Injektors ein einzelnes Bauteil, welches zur Ausbildung des fertigen Injektors an diesen ansetzbar ist und hier beispielsweise angeschweißt oder angelötet sein kann. Dies ermöglicht eine individuelle Anpassung des Injektors durch Auswahl und Montage einer angepassten für die jeweilige Anwendung geeignete Sprühscheibe.

Die Verstärkungsstruktur ist so ausgebildet, dass diese nicht von dem Sprühstrahl benetzt wird. "Nicht benetzt" bedeutet hier insbesondere, dass eine (Innen-)Oberfläche der Verstärkungsstruktur zumindest nicht vollständig mit flüssigem Additiv bedeckt wird. Dies bedeutet mit anderen Worten auch, dass der Sprühstrahl nicht direkt auf die Verstärkungsstruktur ausgerichtet ist bzw. nicht die Verstärkungsstruktur (im normalen Betrieb des Abgassystems) direkt kontaktiert. Der Sprühstrahl hat häufig die Form eines Sprühkegels. Vorzugsweise ist die Verstärkungsstruktur so ausgebildet, dass sie von dem Sprühkegel nicht benetzt bzw. tangiert bzw. geschnitten wird. Mit anderen Worten ausgedrückt bedeutet dies auch, dass die Verstärkungsstruktur nicht zur Formung des Sprühstrahls beiträgt.

Bevorzugt ist die Sprühscheibe einteilig bzw. einstückig gebildet. Dies ist jedoch nicht zwingend, weil die Sprühscheibe auch mehrteilig, insbesondere mittels mehrerer miteinander verbundener Scheiben, gebildet sein kann. Wenn die Sprühscheibe einteilig gebildet ist, so kann die Sprühscheibe (gedanklich) in einen Grundabschnitt und einen Verstärkungsabschnitt unterteilt verstanden sein, wobei beide "gedanklichen" Abschnitte ebenfalls jeweils scheibenförmig sind.

Nach einer vorteilhaften Ausgestaltung wird vorgeschlagen, dass die Verstärkungsstruktur mit einem Verstärkungsabschnitt der Sprühscheibe gebildet ist, wobei sich der mindestens eine Sprühkanal in einer Strömungsrichtung betrachtet ab der Austrittsöffnung mit einem schlagartig erweiterten Kanalquerschnitt durch den Verstärkungsabschnitt hindurch erstreckt.

Zwischen der Sprühscheibe, insbesondere einem Grundabschnitt der Sprühscheibe, und der Verstärkungsstruktur, insbesondere einem Verstärkungsabschnitt der Sprühscheibe oder einer Stützscheibe, liegt (gedanklich) eine Trennebene. In dieser Trennebene liegen die Austrittsöffnungen der Sprühkanäle.

Wenn sich die Sprühkanäle weiter durch die Verstärkungsstruktur hindurch erstrecken, so erfolgt im Bereich der Austrittsöffnungen eine schlagartige bzw. sprunghafte und/oder plötzliche Erweiterung bzw. Vergrößerung des Kanalquerschnitts des Sprühkanals. Dadurch kann gewährleistet werden, dass der Sprühstrahl bzw. der Sprühkegel nur mittels der Austrittsöffnungen geformt wird und nicht von der Verstärkungsstruktur beeinflusst wird.

Die schlagartige Erweiterung des Kanalquerschnitts liegt hier in Strömungsrichtung betrachtet auf der Höhe der Austrittsöffnung. Diese schlagartige Querschnittserweiterung kann in der Art einer (in Umfangsrichtung umlaufenden) Stufe bzw. eines Kragens oder dergleichen gebildet sein.

Nach einer vorteilhaften Ausgestaltung wird vorgeschlagen, dass die Verstärkungsstruktur mit einer Stützscheibe gebildet ist, wobei die Stützscheibe und die Sprühscheibe miteinander verbunden sind, wobei sich der mindestens eine Sprühkanal in einer Strömungsrichtung betrachtet ab der Austrittsöffnung mit einem schlagartig erweiterten Kanalquerschnitt durch die Stützscheibe hindurch erstreckt. Wenn eine Stützscheibe vorgesehen ist, so hat die Sprühscheibe insbesondere einen mehrteiligen Aufbau umfassend die (Grund-)Sprühscheibe und die Stützscheibe.

Nach einer vorteilhaften Ausgestaltung wird vorgeschlagen, dass die Sprühscheibe und die Stützscheibe stoffschlüssig miteinander verbunden sind. Unter einer "stoffschlüssigen" Verbindung wird hier eine "Material-Material-Verbindung" verstanden. Bevorzugt sind die Sprühscheibe und die Stützscheibe mittels einer Schweißverbindung oder einer Lötverbindung, insbesondere Hartlötverbindung, miteinander verbunden.

Nach einer weiteren vorteilhaften Ausgestaltung wird vorgeschlagen, dass der mindestens eine Sprühkanal stromauf der Austrittsöffnung mit einem ersten Kanalabschnitt und stromab der Austrittsöffnung mit einem zweiten Kanalabschnitt gebildet ist, wobei der erste Kanalabschnitt einen reduzierten Kanalquerschnitt und der zweite Kanalabschnitt einen erweiterten Kanalquerschnitt aufweist und wobei ein Verhältnis von dem reduzierten Kanalquerschnitt zu dem erweiterten Kanalquerschnitt kleiner als 0,8 ist. Bevorzugt ist ein Verhältnis von dem reduzierten Kanalquerschnitt zu dem erweiterten Kanalquerschnitt kleiner als 0,66 und besonders bevorzugt kleiner als 0,5 oder sogar kleiner als 0,33.

Aufgrund der sprunghaften Querschnittserweiterung des Sprühkanals kommt es dazu, dass der erweiterte Kanalquerschnitt den reduzierten Kanalquerschnitt in bzw. entgegen der Strömungsrichtung betrachtet (vollständig) überspannt bzw. überdeckt. Dies hat den Vorteil, dass das Sprühbild bzw. der Sprühkegel und/oder die Tropengrößen nicht von dem zweiten Kanalabschnitt beeinflusst werden. Die Austrittsöffnung ist hier, mit anderen Worten ausgedrückt, die Austrittsöffnung des ersten Kanalabschnitts des Sprühkanals und liegt im Bereich der sprunghaften Querschnittserweiterung.

Ein Kanalabschnitt betrifft hier einen Teilbereich des Sprühkanals entlang der Strömungsrichtung. Die Sprühkanäle haben in allen Kanalabschnitten eine Kanalinnenwand entlang derer das flüssige Additiv strömen bzw. fließen kann. Der erste Kanalabschnitt und der zweite Kanalabschnitt sind fluidführend miteinander verbunden. Die Kanalabschnitte können beispielsweise mit Bohrungen, insbesondere Durchgangsbohrungen, Ausnehmungen oder dergleichen in der Sprühscheibe gebildet sein.

Nach einer weiteren vorteilhaften Ausgestaltung wird vorgeschlagen, dass der mindestens eine Sprühkanal stromauf der Austrittsöffnung mit einem ersten Kanalabschnitt und stromab der Austrittsöffnung mit einem zweiten Kanalabschnitt gebildet ist, wobei der erste Kanalabschnitt eine erste Abschnittslänge und der zweite Kanalabschnitt eine zweite Abschnittslänge hat und wobei ein Verhältnis von erster Abschnittslänge zu zweiter Abschnittslänge kleiner oder gleich 1 ist. Bevorzugt ist ein Verhältnis von erster Abschnittslänge zu zweiter Abschnittslänge kleiner als 0,8 und besonders bevorzugt kleiner als 0,66 oder sogar kleiner als 0,33. Die Abschnittslänge bezieht sich auf eine Länge entlang der Strömungsrichtung.

In absoluten Längenangaben beläuft sich die erste Abschnittslänge beispielsweise auf 100 µm bis 300 µm [Mikrometer] und die zweite Abschnittslänge auf 300 µm bis 800 µm [Mikrometer]. Bevorzugt liegt die erste Abschnittslänge in einem Bereich von 135 µm bis 180 µm [Mikrometer] und die zweite Abschnittslänge in einem Bereich von 380 µm bis 580 µm [Mikrometer]. Die erste Abschnittslänge kann im Verhältnis zur zweiten Abschnittsmenge sehr dünn sein, weil die von dem Verstärkungsabschnitt bzw. von der Stützscheibe gebildete Verstärkungsstruktur den Teil der Sprühscheibe stützt, welcher den ersten Kanalabschnitt mit der ersten Abschnittslänge bildet. Eine dünne Sprühscheibe ermöglicht eine besonders präzise und gute Sprayausbildung, die insbesondere besonders unabhängig von der gesprühten Menge von flüssigem Additiv ist.

Nach einer noch weiteren vorteilhaften Ausgestaltung wird vorgeschlagen, dass in dem Injektor ein Kompensationselement angeordnet ist. Das Kompensationselement kann zum Ausgleich eines steigenden Eisdrucks aufgrund der Volumenzunahme des wässrigen Additivs im Einfrierfall dienen. Das Kompensationselement kann mit mindestens einer Feder, mindestens einem komprimierbaren bzw. deformierbaren (gasgefüllten) Balg, mindestens einer elastischen Lasche, insbesondere einer Gummilasche, oder dergleichen gebildet sein. Das Kompensationselement kann an einem Anschlussbereich des Injektors gehalten, gestützt bzw. befestigt sein. Das Kompensationselement kann darüber hinaus mit einer Ventileinheit in dem Injektor in Kontakt bringbar sein.

Das Kompensationselement in dem Injektor bietet den Vorteil, dass der Injektor vor Beschädigungen aufgrund eines inneren Eisdrucks geschützt werden kann. Ein Vorspannen des gesamten Injektors, beispielsweise mit einer äußeren Feder zwischen einem äußeren Gehäuse und dem Injektor, kann somit vermieden werden. Dies hat den Vorteil, dass eine Relativbewegung der Dichtungen des Injektors in dem Gehäuse vermieden werden kann.

Durch die Verstärkungsstruktur weist die Sprühscheibe eine erhöhte Festigkeit auf, welche eine Verformung der Sprühscheibe bei auftretendem Eisdruck verhindert. Durch ein an dem Anschlussbereich des Injektors ausgebildetes Kompensationselement kann die erhöhte Steifigkeit der Sprühscheibe ausgeglichen werden, indem das Kompensationselement an dem Anschlussbereich zusätzliches Volumen freigibt, wenn innerhalb des Injektors Eisdruck auftritt.

Nach einer noch weiteren vorteilhaften Ausgestaltung wird vorgeschlagen, dass in der Sprühscheibe stromauf des mindestens einen Sprühkanals mindestens eine Fluidverteilungsstruktur gebildet ist. Die Fluidverteilungsstruktur dient einer möglichst gleichmäßigen Zuführung des flüssigen Additivs zu den einzelnen Sprühkanälen. Die Fluidverteilungsstruktur kann mit mindestens einer Ausnehmung, Bohrung, Fräsung oder dergleichen ausgeführt sein. Die Fluidverteilungsstruktur ist mit anderen Worten ausgedrückt in eine Oberseite der Sprühscheibe eingebracht. Im Bereich der Oberseite kann die Fluidverteilungsstruktur mehrere Sprühkanäle, insbesondere Sprühkanaleingänge, miteinander verbinden. Mit anderen Worten kann die Fluidverteilungsstruktur auch als eine lokale Reduzierung der Dicke der Sprühscheibe beschrieben werden.

Nach einer noch weiteren vorteilhaften Ausgestaltung wird vorgeschlagen, dass der mindestens eine Sprühkanal stromauf der Austrittsöffnung mit einem ersten Kanalabschnitt und stromab der Austrittsöffnung mit einem zweiten Kanalabschnitt gebildet ist, wobei mindestens einer der zweiten Kanalabschnitte exzentrisch zu dem zugehörigen ersten Kanalabschnitt ausgerichtet ist. Die exzentrische Ausrichtung bezieht sich hier auf die jeweiligen Mittelachsen der Kanalabschnitte, die bei einer exzentrischen Ausrichtung nicht aufeinander liegen. Eine exzentrische Ausrichtung hat den Vorteil, dass der Sprühstrahl bzw. der Sprühkegel an die Richtung der Abgasströmung angepasst werden kann. Die Abgasströmung wird den Sprühstrahl normalerweise in Abgasströmungsrichtung umlenken. Hierbei kann die exzentrische Ausrichtung helfen, dass der Sprühstrahl nicht in Kontakt mit der Verstärkungsstruktur gelangt. Vorzugsweise ist der zweite Kanalabschnitt derart exzentrisch zu dem ersten Kanalabschnitt angeordnet, dass in dem zweiten Kanalabschnitt in Abgasströmungsrichtung mehr Platz für einen Sprühkegel des Injektors zur Verfügung steht.

Nach einem weiteren Aspekt wird auch ein Kraftfahrzeug vorgeschlagen, zumindest aufweisend eine Verbrennungskraftmaschine, eine Abgasbehandlungsvorrichtung zur Reinigung der Abgase der Verbrennungskraftmaschine, wobei an der Abgasbehandlungsvorrichtung ein Injektor, wie er vorangehend beschrieben wurde, zur Zugabe des flüssigen Additivs vorgesehen ist.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Es zeigen schematisch:
- Fig. 1:: eine Schnittdarstellung eines Injektors,
- Fig. 2:: eine Schnittdarstellung einer Sprühscheibe,
- Fig. 3:: eine Schnittdarstellung einer weiteren Sprühscheibe,
- Fig. 4:: eine Schnittdarstellung noch einer weiteren Sprühscheibe,
- Fig. 5:: eine Ansicht von unten auf eine Sprühscheibe,
- Fig. 6:: eine Ansicht von oben auf eine Sprühscheibe,
- Fig. 7:: ein Kraftfahrzeug mit einem Injektor.

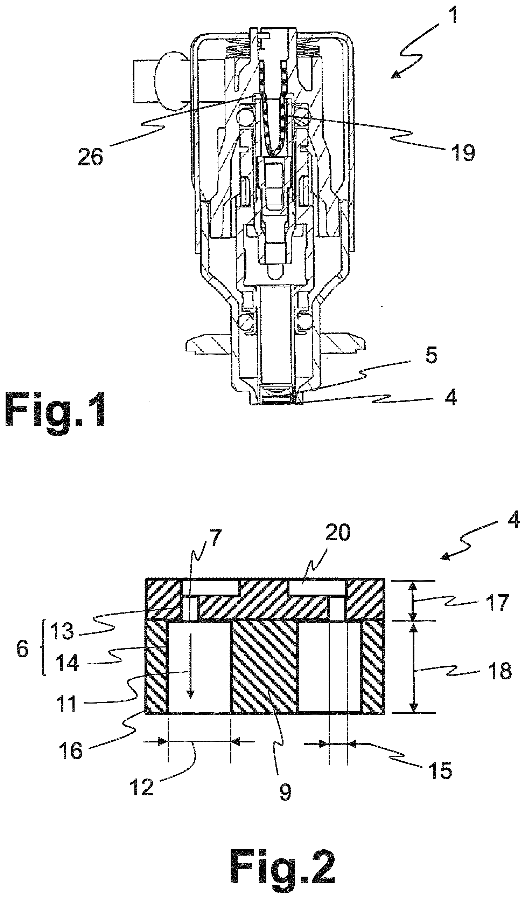

Fig. 1 zeigt eine Schnittdarstellung eines Injektors 1. Der Injektor 1 weist eine mit einer Sprühscheibe 4 gebildete Düse 5 zum Eindüsen eines flüssigen Additivs in die Abgasbehandlungsvorrichtung auf. Zudem ist in dem Injektor 1 ein Kompensationselement 19 nach Art einer elastischen Hülse vorgesehen. Das Kompensationselement 19 ist in einem Anschlussbereich 26 des Injektors 1 angeordnet.

Fig. 2 zeigt eine Schnittdarstellung einer Sprühscheibe 4. Die Sprühscheibe 4 weist zwei durchströmbare Sprühkanäle 6 mit jeweils einer Austrittsöffnung 7 auf. Es ist zu erkennen, dass die Sprühscheibe 4 stromab der Austrittsöffnungen 7 mit einer Verstärkungsstruktur 9 gebildet ist. Dadurch wird die Sprühscheibe 4 an ihrer Unterseite mittels der Verstärkungsstruktur 9 verstärkt, so dass die Sprühscheibe 4 auch hohen Eisdrücken in dem Injektor 1 standhalten kann.

Die Sprühscheibe 4 ist hier zweiteilig gebildet, wobei die Austrittsöffnungen 7 in einer gedachten Teilungsebene der Sprühscheibe 4 liegen.

Nach der Darstellung gemäß Fig. 2 ist die Verstärkungsstruktur 9 mit einer Stützscheibe 16 gebildet, wobei die Stützscheibe 16 und die Sprühscheibe 4 miteinander fest verbunden sind. Hierbei erstrecken sich die Sprühkanäle 6 in einer Strömungsrichtung 11 betrachtet ab der Austrittsöffnung 7 durch die Stützscheibe 16 hindurch und haben dort gegenüber einem ersten Kanalabschnitt 13 einen schlagartig erweiterten Kanalquerschnitt 12.

Die Sprühkanäle 6 sind stromauf der Austrittsöffnungen 7 jeweils mit einem ersten Kanalabschnitt 13 und stromab der Austrittsöffnungen 7 jeweils mit einem zweiten Kanalabschnitt 14 gebildet. Der erste Kanalabschnitt 13 hat einen reduzierten Kanalquerschnitt 15 und der zweite Kanalabschnitt 14 hat einen erweiterten Kanalquerschnitt 12. Zudem weist der erste Kanalabschnitt 13 eine erste Abschnittslänge 17 und der zweite Kanalabschnitt 14 eine zweite Abschnittslänge 18 auf. In der Sprühscheibe 4 ist stromauf des jeweiligen Sprühkanals 6 eine Fluidverteilungsstruktur 20 gebildet, durch welche das flüssige Additiv in die Sprühkanäle 6 eingeleitet werden kann.

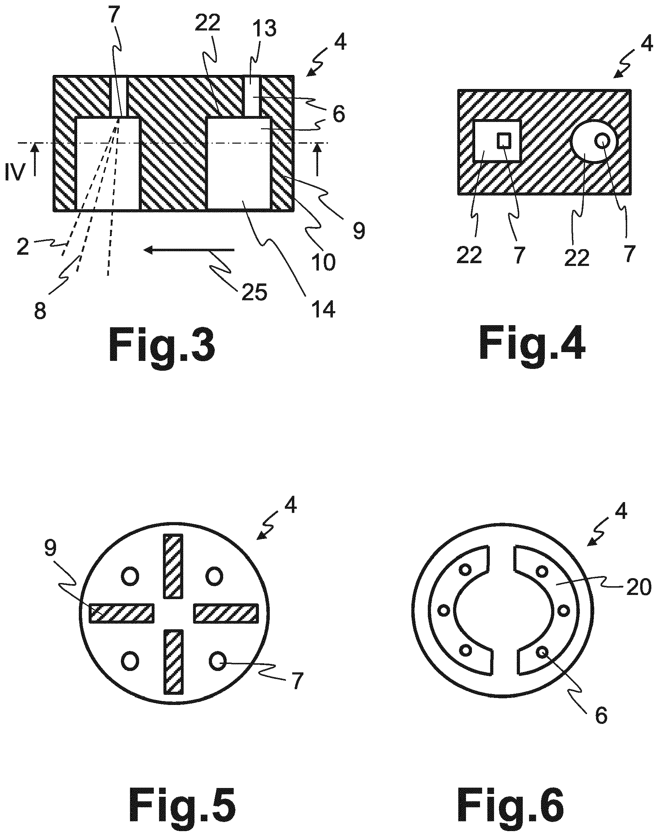

Fig. 3 zeigt eine Schnittdarstellung einer einteilig bzw. einstückig gebildeten Sprühscheibe 4. Die Verstärkungsstruktur 9 ist hier mit einem Verstärkungsabschnitt 10 der Sprühscheibe 4 gebildet. Mit anderen Worten ausgedrückt ist die Sprühscheibe 4 hier an sich bereits aus einer (einzigen) dicken Scheibe bereitgestellt, wobei die zweiten Kanalabschnitte 14 der Sprühkanäle 6 in dem Verstärkungsabschnitt 10 der Sprühscheibe 4 in der Art von Bohrungen und/oder Ausnehmungen gebildet sind. Dies bedeutet auch, dass die Verstärkungsstruktur 9 hier nicht auf eine dünne Grundscheibe aufgebracht ist, sondern vielmehr aus einer dicken Sprühscheibe 4 mittels Bohrungen und/oder Ausnehmungen herausgearbeitet ist. Die Sprühkanäle 6 sind im Bereich der Austrittsöffnungen 7 mit einer schlagartigen Querschnittserweiterung ausgeführt, die eine Art Stufe 22 bildet.

In Fig. 3 ist zu erkennen, dass die zweiten Kanalabschnitte 14 exzentrisch zu den jeweils zugehörigen ersten Kanalabschnitten 13 ausgerichtet sind. Hierdurch wird erreicht, dass der Sprühstrahl 8 des Additivs 2 nicht in direkten Kontakt mit einer Kanalinnenfläche des zweiten Kanalabschnitts 14 gelangt, obwohl ein Sprühstrahl 8 aufgrund des strömenden Abgases 25 teilweise verformt wird. Es ist hier auch möglich, dass die ersten Kanalabschnitte 13 und/oder die zweiten Kanalabschnitte 14 sich erweiternde bzw. verjüngende Querschnitte aufweisen.

Fig. 4 zeigt eine Schnittdarstellung einer weiteren Sprühscheibe 4, die beispielsweise der Sprühscheibe aus Figur 3 entsprechen kann. Fig. 3 ist allerdings nicht auf Sprühscheiben mit einer Schnittfläche entsprechend Fig. 4 beschränkt. Die mögliche Schnittebene ist in Fig. 3 mit IV gekennzeichnet und liegt im Bereich des Verstärkungsabschnitts 10. Der Blick ist hier von unten auf die Stufe 22 und die Austrittsöffnungen 7 gerichtet. Die Sprühscheibe 4 hat hier beispielhaft einen rechteckigen Querschnitt. Die Stufe 22 und die Austrittsöffnung 7 des links dargestellten Sprühkanals 6 weisen beispielhaft einen rechteckigen Querschnitt auf. Die Stufe 22 und die Austrittsöffnung 7 des rechts dargestellten Sprühkanals 6 sind dahingegen beispielhaft mit einer ovalen Form gebildet. Es ist darauf hinzuweisen, dass Fig. 4 nur schematisch ist und zur Veranschaulichung unterschiedlicher Formen zwei verschiedene Sprühkanalformen zeigt. Tatsächliche Sprühscheiben haben üblicherweise jeweils "nur" eine bestimmte Art von Kanalformen.

Fig. 5 zeigt eine Ansicht von unten auf eine Sprühscheibe 4. An der Unterseite ist die Sprühscheibe 4 mit einer Verstärkungsstruktur 9 gebildet. Die Verstärkungsstruktur 9 ist hier beispielhaft mit vier Verstärkungsrippen gebildet, wobei die Verstärkungsrippen hier geschnitten dargestellt sind. Da der Blick von unten auf die Sprühscheibe 4 gerichtet ist, sind auch Austrittsöffnungen 7 zu erkennen.

Fig. 6 zeigt eine Ansicht von oben auf eine Sprühscheibe 4. In der Sprühscheibe 4 ist in einem oberen Bereich eine Fluidverteilungsstruktur 20 gebildet. Die Fluidverteilungsstruktur 20 ist hier mit zwei kreisbogenförmigen Ausnehmungen ausgeführt. Es ist gezeigt, dass jede der Ausnehmungen drei Sprühkanäle 6 miteinander verbindet. Mit anderen Worten ausgedrückt, erstrecken sich jeweils drei Sprühkanäle 6 von einer Ausnehmung der Fluidverteilungsstruktur 20 aus in die Sprühscheibe 4 hinein und durch diese hindurch.

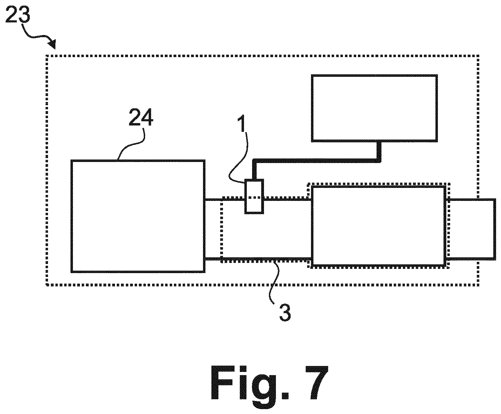

Fig. 7 zeigt ein Kraftfahrzeug 23, zumindest aufweisend eine Verbrennungskraftmaschine 24, eine Abgasbehandlungsvorrichtung 3 zur Reinigung der Abgase der Verbrennungskraftmaschine 24, wobei an der Abgasbehandlungsvorrichtung 3 ein Injektor 1 zur Zugabe des flüssigen Additivs vorgesehen ist.

## Patentansprüche

1. Injektor (1) zur Zugabe eines flüssigen Additivs (2) in eine Abgasbehandlungsvorrichtung (3), wobei der Injektor (1) zumindest eine mit einer Sprühscheibe (4) gebildete Düse (5) zum Eindüsen des flüssigen Additivs (2) in die Abgasbehandlungsvorrichtung (3) aufweist, wobei die Sprühscheibe (4) mindestens zwei durchströmbare Sprühkanäle (6) mit je einer Austrittsöffnung (7) aufweist, wobei die Austrittsöffnungen (7) so ausgebildet sind, dass diese je einen Sprühstrahl (8) formen und wobei die Sprühscheibe (4) stromab der Austrittsöffnung (7) mit einer Verstärkungsstruktur (9) so ausgebildet ist, dass die Sprühkanäle (6) stromauf der Austrittsöffnungen (7) mit je einem ersten Kanalabschnitt (13) und stromab der Austrittsöffnungen (7) mit je einem zweiten Kanalabschnitt (14) gebildet sind, wobei die Verstärkungsstruktur (9) die zweiten Kanalabschnitte (14) aufweist und wobei die Verstärkungsstruktur (9) so ausgebildet ist, dass diese nicht von dem Sprühstrahl (8) benetzt wird.

2. Injektor nach Patentanspruch 1, wobei die Verstärkungsstruktur (9) mit einem Verstärkungsabschnitt (10) der Sprühscheibe (4) gebildet ist, wobei sich der mindestens eine Sprühkanal (6) in einer Strömungsrichtung (11) betrachtet ab der Austrittsöffnung (7) mit einem schlagartig erweiterten Kanalquerschnitt (12) durch den Verstärkungsabschnitt (10) hindurch erstreckt.

3. Injektor nach Patentanspruch 1, wobei die Verstärkungsstruktur (9) mit einer Stützscheibe (16) gebildet ist, wobei die Stützscheibe (16) und die Sprühscheibe (4) miteinander verbunden sind, wobei sich der mindestens eine Sprühkanal (6) in einer Strömungsrichtung (11) betrachtet ab der Austrittsöffnung (7) mit einem schlagartig erweiterten Kanalquerschnitt (12) durch die Stützscheibe (16) hindurch erstreckt.

4. Injektor nach Patentanspruch 3, wobei die Sprühscheibe (4) und die Stützscheibe (16) stoffschlüssig miteinander verbunden sind.

5. Injektor nach einem der vorhergehenden Patentansprüche, wobei der erste Kanalabschnitt (13) einen reduzierten Kanalquerschnitt (15) und der zweite Kanalabschnitt (14) einen erweiterten Kanalquerschnitt (12) aufweist und wobei ein Verhältnis von dem reduzierten Kanalquerschnitt (15) zu dem erweiterten Kanalquerschnitt (12) kleiner als 0,8 ist.

6. Injektor nach einem der vorhergehenden Patentansprüche, wobei der erste Kanalabschnitt (13) eine erste Abschnittslänge (17) und der zweite Kanalabschnitt (14) eine zweite Abschnittslänge (18) hat und wobei ein Verhältnis von erster Abschnittslänge (17) zu zweiter Abschnittslänge (18) kleiner oder gleich 1 ist.

7. Injektor nach einem der vorhergehenden Patentansprüche, wobei in dem Injektor (1) ein Kompensationselement (19) angeordnet ist.

8. Injektor nach einem der vorhergehenden Patentansprüche, wobei in der Sprühscheibe (4), stromauf der mindestens zwei Sprühkanäle (6) mindestens eine Fluidverteilungsstruktur (20) gebildet ist.

9. Injektor nach einem der vorhergehenden Patentansprüche, wobei mindestens einer der zweiten Kanalabschnitte (14) exzentrisch zu dem zugehörigen ersten Kanalabschnitt (13) ausgerichtet ist.

10. Kraftfahrzeug (23), zumindest aufweisend eine Verbrennungskraftmaschine (24), eine Abgasbehandlungsvorrichtung (3) zur Reinigung der Abgase der Verbrennungskraftmaschine (24), wobei an der Abgasbehandlungsvorrichtung (3) ein Injektor (1) nach einem der vorhergehenden Patentansprüche zur Zugabe des flüssigen Additivs (2) vorgesehen ist.

## Claims

1. Injector (1) for adding a liquid additive (2) into an exhaust gas treatment apparatus (3), the injector (1) having at least one nozzle (5) which is formed with a spray disk (4) for injecting the liquid additive (2) into the exhaust gas treatment apparatus (3), the spray disk (4) having at least two spray ducts (6), through which flow can pass, each with an outlet opening (7), the outlet openings (7) being configured in such a way that they each shape a spray jet (8), and the spray disk (4) being formed downstream of the outlet opening (7) by way of a reinforcing structure (9) in such a way that the spray ducts (6) are formed upstream of the outlet openings (7) each by way of a first duct section (13) and downstream of the outlet openings (7) each by way of a second duct section (14), the reinforcing structure (9) having the second duct sections (14) and the reinforcing structure (9) being configured in such a way that it is not wetted by the spray jet (8).

2. Injector according to Patent Claim 1, the reinforcing structure (9) being formed by way of a reinforcing section (10) of the spray disk (4), the at least one spray duct (6) extending through the reinforcing section (10), as viewed in a flow direction (11), from the outlet opening (7) with a duct cross section (12) which widens suddenly.

3. Injector according to Patent Claim 1, the reinforcing structure (9) being formed by way of a supporting disk (16), the supporting disk (16) and the spray disk (4) being connected to one another, the at least one spray duct (6) extending through the supporting disk (16), as viewed in a flow direction (11), from the outlet opening (7) with a duct cross section (12) which widens suddenly.

4. Injector according to Patent Claim 3, the spray disk (4) and the supporting disk (16) being connected to one another in an integrally joined manner.

5. Injector according to one of the preceding patent claims, the first duct section (13) having a reduced duct cross section (15), and the second duct section (14) having a widened duct cross section (12), and a ratio of the reduced duct cross section (15) to the widened duct cross section (12) being less than 0.8.

6. Injector according to one of the preceding patent claims, the first duct section (13) having a first section length (17), and the second duct section (14) having a second section length (18), and a ratio of the first section length (17) to the second section length (18) being less than or equal to 1.

7. Injector according to one of the preceding patent claims, a compensation element (19) being arranged in the injector (1).

8. Injector according to one of the preceding patent claims, at least one fluid distribution structure (20) being formed in the spray disk (4) upstream of the at least two spray ducts (6) .

9. Injector according to one of the preceding patent claims, at least one of the second duct sections (14) being oriented eccentrically with respect to the associated first duct section (13) .

10. Motor vehicle (23), at least having an internal combustion engine (24) and an exhaust gas treatment apparatus (3) for purifying the exhaust gases of the internal combustion engine (24), an injector (1) according to one of the preceding patent claims for adding the liquid additive (2) being provided on the exhaust gas treatment apparatus (3).

## Revendications

1. Injecteur (1) destiné à ajouter un additif liquide (2) dans un dispositif de traitement de gaz d'échappement (3), l'injecteur (1) comportant au moins une buse (5) formée avec un disque de pulvérisation (4) et destinée à injecter l'additif liquide (2) dans le dispositif de traitement de gaz d'échappement (3), le disque de pulvérisation (4) comportant au moins deux conduits de pulvérisation (6) pouvant être traversés par un écoulement et pourvus chacun d'une ouverture de sortie (7), les ouvertures de sortie (7) étant conçues de manière à former chacune un jet de pulvérisation (8) et le disque de pulvérisation (4) étant conçu, en aval de l'ouverture de sortie (7), avec une structure de renforcement (9) de sorte que les conduits de pulvérisation (6) sont chacun formés, en amont des ouvertures de sortie (7), avec une première partie de conduit (13) et, en aval des ouvertures de sortie (7), avec une deuxième partie de conduit (14), la structure de renforcement (9) comportant les deuxièmes parties de conduit (14) et la structure de renforcement (9) étant conçue de manière à ne pas être mouillée par le jet de pulvérisation (8).

2. Injecteur selon la revendication 1, la structure de renforcement (9) étant formée avec une partie de renforcement (10) du disque de pulvérisation (4), l'au moins un conduit de pulvérisation (6) s'étendant depuis l'ouverture de sortie (7), par référence à une direction d'écoulement (11), avec une section transversale de conduit subitement élargie (12) à travers la partie de renforcement (10).

3. Injecteur selon la revendication 1, la structure de renforcement (9) étant formée avec un disque de support (16), le disque de support (16) et le disque de pulvérisation (4) étant reliés l'un à l'autre, l'au moins un conduit de pulvérisation (6) s'étendant depuis l'ouverture de sortie (7), par référence à une direction d'écoulement (11), avec une section transversale de conduit subitement élargie (12) à travers le disque de support (16).

4. Injecteur selon la revendication 3, le disque de pulvérisation (4) et le disque de support (16) étant reliés l'un à l'autre par une liaison de matière.

5. Injecteur selon l'une des revendications précédentes, la première partie de conduit (13) ayant une section transversale de conduit réduite (15) et la deuxième partie de conduit (14) ayant une section transversale de conduit élargie (12) et un rapport de la section transversale de conduit réduite (15) à la section transversale de conduit élargie (12) étant inférieur à 0,8.

6. Injecteur selon l'une des revendications précédentes, la première partie de conduit (13) ayant une première longueur (17) et la deuxième partie de conduit (14) ayant une deuxième longueur (18) et un rapport de la première longueur (17) à la deuxième longueur (18) étant inférieur ou égal à 1.

7. Injecteur selon l'une des revendications précédentes, un élément de compensation (19) étant disposé dans l'injecteur (1).

8. Injecteur selon l'une des revendications précédentes, au moins une structure de distribution de fluide (20) étant formée dans le disque de pulvérisation (4) en amont des au moins deux conduits de pulvérisation (6).

9. Injecteur selon l'une des revendications précédentes, au moins une des deuxièmes parties de conduit (14) étant orientée de manière excentrique par rapport à la première partie de conduit (13) associée.

10. Véhicule automobile (23), comprenant au moins un moteur à combustion interne (24), un dispositif de traitement de gaz d'échappement (3) destiné à nettoyer les gaz d'échappement du moteur à combustion interne (24), un injecteur (1) selon l'une des revendications précédentes étant prévu au niveau du dispositif de traitement de gaz d'échappement (3) pour ajouter l'additif liquide (2).
